# EUROPÄISCHE PATENTSCHRIFT

(11) **EP 1 018 419 B1**
(45) Veröffentlichungstag und Bekanntmachung des Hinweises auf die Patenterteilung: **29.05.2002**
(21) Anmeldenummer: 99124993.9
(22) Anmeldetag: 15.12.1999
(51) Int. Cl.: B29C 44/00

(54) **Polyurethanschaumformkörper**
Polyurethane foam structure
Pièce moulée en mousse polyurethane

(30) Priorität: 07.01.1999 DE 19900249
(43) Veröffentlichungstag der Anmeldung: 12.07.2000
(73) Patentinhaber: BASF AKTIENGESELLSCHAFT, 67056 Ludwigshafen (DE)
(72) Erfinder: Heinz, Marion, 02994 Bernsdorf (DE); Biedermann, Anja, Dr., 01968 Senftenberg (DE); Rotermund, Udo, Dr., 01990 Ortrand (DE); Reichelt, Michael, 01945 Ruhland (DE); Wiegmann, Werner, 32369 Rahdem (DE)

(56) Entgegenhaltungen:
- WO-A-98/29309
- US-A- 5 840 139
- PATENT ABSTRACTS OF JAPAN vol. 1997, no. 01, 31. Januar 1997 (1997-01-31) & JP 08 229972 A (FUSO GOSEI KK), 10. September 1996 (1996-09-10)
- PATENT ABSTRACTS OF JAPAN vol. 1996, no. 04, 30. April 1996 (1996-04-30) & JP 07 323434 A (KANTO LEATHER CLOTH CO LTD), 12. Dezember 1995 (1995-12-12)

## Beschreibung

Gegenstand der Erfindung ist ein Verfahren zur Herstellung von Polyurethanschaumformkörpern aus Polyurethan-Hartschaumstoffen, mit an der Oberfläche befindlichen länglichen Rillen.

Polyurethan-Hartschaumstoffe sind seit langem bekannt und vielfach in der Literatur beschrieben. Ihr Einsatz erfolgt vorzugsweise als Isoliermaterial für die Wärmedämmung, beispielsweise für Kühlschränke, Fernwärmerohre oder Kühlcontainer für Schiffe oder Kühlfahrzeuge. Neuerdings werden zur weiteren Verbesserung der Isoliereigenschaften sogenannte Vakuum-Isoliereinheiten, z.B. Vakuum-Paneele, verwendet. Diese bestehen zumeist aus einem porösen Kernmaterial, das evakuiert und mit einer luftdichten Umhüllung versehen wird. Eine andere Möglichkeit der Ausgestaltung für Vakuum-Isoliereinheiten besteht darin, die Hohlräume mit Polyurethan-Hartschaumstoffen auszufüllen, zu evakuieren und kontinuierlich oder jeweils bei Bedarf, das heißt bei Erhöhung des Innendrucks der Hohlräume, zu evakuieren.

Die als Kernmaterial für derartige Vakuum-Isoliereinheiten eingesetzten Polyurethan-Hartschaumstoffe müssen, im Gegensatz zu üblichen Polyurethan-Hartschaumstoffen für Isolierzwecke, offenzellig sein, um eine Evakuierung zu ermöglichen.

Dennoch kommt es, insbesondere bei sehr großen auszuschäumenden Hohlräumen, oftmals zu sehr langen Evakuierzeiten. Um diesem Mangel abzuhelfen, ist es bekannt, in die als Kernmaterialien für die Vakuum-Isoliereinheiten verwendeten Schaumstoffe Kanäle einzubringen, durch die das Evakuieren der Vakuum-Isoliereinheiten erleichtert wird. So beschreibt DE-A-42 14 002 Vakuum-Isoliereinheiten, bei denen zwischen zwei Teilen des Kernmaterials ein mechanisch stabilisierter Hohlraum angebracht ist. In DE-A-195 28 128 wird ein Sandwich-Bauelement beschrieben, in dessen Inneren ein perforiertes Metallrohr angebracht ist. Dieses perforierte Metallrohr ist mit dem Vakuumsystem verbunden. Nachteilig an diesen Lösungen ist die komplizierte technische Ausgestaltung. In WO 98/29309 werden Vakuum-Isoliereinheiten mit offenzelligen Hartschaumstoffen als Kernmaterial beschrieben. An der Oberfläche dieser Schaumstoffblöcke sind Rillen angeordnet, die das Evakuieren erleichtern sollen. Diese Rillen werden durch mechanische Bearbeitung angebracht. Nachteilig ist hierbei, daß die mechanische Bearbeitung einen zusätzlichen Verfahrensschritt darstellt, der die Wirtschaftlichkeit des Verfahrens mindert und außerdem zu Produktverlusten führt. Außerdem ist dieses Verfahren beim Ausschäumen von Hohlräumen, beispielsweise Sandwich-Elementen oder Bauteilen für Kühlschränke, bei denen der Polyurethanschaum direkt zwischen die Deckschichten eingebracht und dort evakuiert wird, nicht anwendbar.

In US-A-5,840,139 werden Isolierbehälter beschrieben, die an ihrer Oberfläche Vertiefungen aufweisen. Diese kommen zustande, indem auf die Oberfläche der als Isolierung dienenden thermoplastischen Schaumstoffe vor der Expansion Stoffe aufgebracht werden, welche die Expansion an diesen Stellen verhindern.

Aufgabe der Erfindung war es, Polyurethanschaumformkörper für Vakuum-Isoliereinheiten bereitzustellen, die leicht zu evakuieren sind, ohne daß zu ihrer Herstellung aufwendige mechanische Bearbeitungen notwendig sind.

Die Aufgabe konnte überraschenderweise dadurch gelöst werden, daß vor dem Einbringen des Polyurethanschaumsystems in das Formwerkzeug beziehungsweise in den auszuschäumenden Hohlraum auf die Oberfläche des Formwerkzeugs beziehungsweise die Deckschichten des auszuschäumenden Hohlraums Materialien aufgebracht werden, die dort, wo sie aufgebracht sind, den Schäumprozeß in der Weise beeinflussen, daß in der Umgebung dieser Materialien an der Oberfläche des Schaums Rillen entstehen. Diese Materialien werden insbesondere in einer solchen geometrischen Anordnung angebracht, daß längliche, in Richtung der Evakuierung verlaufende Rillen entstehen.

Gegenstand der Erfindung ist demzufolge ein Verfahren zur Herstellung von Polyurethanschaumformkörpern, mit Rillen an ihrer Oberfläche, dadurch gekennzeichnet, daß vor dem Einbringen des Polyurethansystems in das Formwerkzeug beziehungsweise den auszuschäumenden Hohlraum auf die Oberfläche des Formwerkzeugs beziehungsweise die Deckschichten des Hohlraums Substanzen aufgebracht werden, die dort, wo sie aufgebracht sind, den Schaumprozeß in der Weise beeinflussen, daß in der Umgebung dieser Materialien an der Oberfläche des Schaums Rillen entstehen. Diese Materialien werden insbesondere in einer solchen geometrischen Anordnung angebracht, daß längliche, in Richtung der Evakuierung verlaufende Rillen entstehen.

Unter Polyurethansystem wird hierbei die flüssige Mischung der Polyurethan-Aufbaukomponenten verstanden. Diese besteht aus einer Isocyanatkomponente und einer Komponente mit aktiven Wasserstoffatomen. Unter Formwerkzeug wird eine Form verstanden, in welche das Polyurethansystem eingebracht und aus dem nach Abschluß der Schaumbildung der fertige Schaum entformt wird. Unter Hohlraum wird ein Volumen verstanden, welches mit Polyurethanschaum gefüllt werden soll. Unter den Deckschichten werden z.B. die Folien eines Vakuumisolationselements, die Außen- oder Innenwand eines Kühlschrankes, die Innenwand von Warmwasserboilern oder Fernwärmerohren usw. verstanden, wobei jeweils in den Hohlraum zwischen den Deckschichten das Polyurethansystem eingebracht wird und die nach dem Schäumprozeß mit dem Schaum eine konstruktive Einheit ergeben.

Die Rillen reichen vorzugsweise bis zu der Seite des Schaumes, an der das Vakuum angelegt wird. Bei dieser Ausgestaltung der erfindungsgemäßen Polyurethanschaumformkörper kann eine besonders schnelle Evakuierung erfolgen.

Als Substanzen, die an der Oberfläche des Formwerkzeugs beziehungsweise der Deckschichten des Hohlraums aufgebracht werden, eignen sich solche chemischen Verbindungen, Mischungen oder Zubereitungen, die eine Benetzung der Oberfläche des Formwerkzeugs beziehungsweise der Deckschichten des Hohlraums mit dem Polyurethansystem verhindern. Dabei kann es sich um Substanzen handeln, die gegenüber den Bestandteilen des Polyurethansystems und der Polyurethanbildungsreaktion inert sind oder um Substanzen, die mit den Bestandteilen des Polyurethansystems, insbesondere der Isocyanatkomponente, reaktiv sind. Die Reaktivitäten mit den Bestandteilen des Polyurethansystems kann toleriert werden, solange keine signifikante Beeinträchtigung der Eigenschaften des Polyurethanschaums auftritt. Bei vielen dieser Substanzen kann es zur Vermeidung der Ausbildung der typischen PUR-Haut kommen, wobei die poröse, offenzellige Schaumstruktur zusätzlich zur besseren Evakuierung genutzt werden kann.

Beispiele für Substanzen, die gegenüber den Bestandteilen des Polyurethansystems und der Polyurethanbildungsreaktion inert sind, sind Fette, Öle und Wachse, wie Luwax®-Marken der Firma BASF Aktiengesellschaft, Latex und gummiartige Verbindungen, Stearate und Stearinsäureester, Gelatine, Silicone, beispielsweise Polyethersilicone als Fette oder Öle, übliche technische Entschäumer und Tenside, Verbindungen, die in der Polyurethanchemie üblicherweise als innere und äußere Trennmittel verwendet werden, wie Metallstearate oder Mikrowachsemulsionen, sowie übliche technische Reinigungsemulsionen und Zubereitungen zum Auflösen von Polyurethan-Hartschaumstoffen, wie N-Methylpyrrolidon oder Solvenon® PC (Propylencarbonat der Firma BASF Aktiengesellschaft).

Beispiele für Substanzen, die gegenüber den Bestandteilen des Polyurethansystems und der Polyurethanbildungsreaktion reaktiv sind, sind Polysaccharide wie Stärken als Mehle und aufgeschlossene Stärken, Zellulose, substituierte Zellulosen, Monosaccharide, Glycerin, Glyceride und Glycerinester, Polyetherole und/oder Polyesterole mit Molmassen kleiner 200, in der Polyurethanchemie übliche Zellöffner mit oder ohne siliconhaltiger Struktur, beispielsweise auf der Basis ungesättigter Verbindungen, z.B. Tegostab® B 8919 der Firma Goldschmidt oder Stearate, an unterschiedliche Träger gebundenes Wasser (z.B. mit Wasser getränkte Fasermaterialien oder Feststoffe molsiebartiger Konsistenz), höhere gesättigte und/oder ein- oder mehrfach ungesättigte Fettsäuren.

Die genannten Substanzen können sowohl einzeln als auch in Form beliebiger Mischungen untereinander eingesetzt werden.

Zur Herstellung der erfindungsgemäßen Polyurethanschauformkörper werden die genannten Substanzen an der Oberfläche des Formwerkzeugs beziehungsweise der Deckschichten aufgebracht. Um die zur Evakuierung geeigneten Rillen auf der Oberfläche zu erhalten, ist es notwendig, die Substanzen streifenförmig in Richtung Evakuierung aufzubringen. Der Anteil der Rillen an der Gesamtoberfläche der Polyurethane ist beliebig, er sollte jedoch, um die Stabilität der Polyurethane nicht zu beeinträchtigen und im Falle des Ausschäumens von Hohlräumen die Haftung des Schaums an der Oberfläche der Deckschichten nicht zu beeinträchtigen, 50 % nicht wesentlich übersteigen. Die Breite der Rillen sollte, je nach der Größe des Polyurethankörpers, 0,1 bis 100 mm, vorzugsweise 2 bis 15 mm, betragen. Die Tiefe der Rillen beträgt 0,1 bis 30 mm, vorzugsweise 1 bis 15 mm. Der Abstand der Rillen voneinander sollte 0,9 bis 30 mm, vorzugsweise 1,5 bis 15 mm betragen.

Nach dem Anbringen der erfindungsgemäß eingesetzten Substanzen wird das Polyurethansystem in die Form beziehungsweise den Hohlraum eingebracht. Das Einbringen des Polyurethansystems kann, wie bei der Polyurethanherstellung üblich, manuell, vorzugsweise jedoch maschinell erfolgen. Das maschinelle Einbringen erfolgt zumeist durch Mischköpfe. Bei der Herstellung von Formkörpern werden diese wie üblich nach der Aushärtung dem Formwerkzeug entnommen.

Eine Entfernung dieser Substanzen vom fertigen Polyurethanschaum ist nicht notwendig. Im Falle des Ausschäumens von Hohlräumen wäre eine Entfernung ohnehin praktisch nicht zu bewerkstelligen.

Überraschenderweise hat sich gezeigt, daß in den Rillen der erfindungsgemäßen Polyurethane die übliche Ausbildung einer glatten Haut an der Oberfläche unterbleibt. Stattdessen weist die Oberfläche der Kanäle eine poröse, offenporige Struktur auf. Diese Struktur ist für die Evakuierung von großem Vorteil.

Die vorzugsweise zur Herstellung der erfindungsgemäßen Polyurethanschaumformkörper eingesetzten offenzelligen Polyurethanhartschaumstoffe sind aus dem Stand der Technik bekannt. Der durchschnittliche Porendurchmesser dieser Schaumstoffe liegt zumeist im Bereich um 100 µm. Zur Herstellung dieser Schaumstoffe werden zumeist Treibmittel verwendet, die in den Polyurethan-Aufbaukomponenten unlöslich sind und in diesen emulgiert werden. Die so hergestellten Schaumstoffe, auch als Emulsionsschaumstoffe bezeichnet, weisen eine sehr feine, gleichmäßige Zellstruktur auf. Die Herstellung derartiger Schaumstoffe wird beispielsweise beschrieben in EP-A-351 614. Als Treibmittel zur Herstellung dieser Schäume können Alkane, vorzugsweise solche mit 3 bis 8, insbesondere solche mit 5 und/oder 6 Kohlenstoffatomen, und/oder hoch- und/oder perfluorierte Verbindungen, insbesondere Perfluoralkane, eingesetzt werden. Die Emulgierung kann durch einfaches mechanisches Rühren, vorzugsweise jedoch mittels üblicher Emulgierhilfsmittel, erfolgen. Als Emulgierhilfsmittel können beispielsweise die in EP-A-351 614 beschriebenen fluorierten Acrylate verwendet werden. Weitere Emulgierhilfsmittel sind beispielsweise Hydroxylgruppen aufweisende Veresterungsprodukte aus Fettsäuren und mehrfunktionellen Alkoholen. Als Treibmittel kann auch ausschließlich Wasser verwendet werden.

Bei den Aufbaukomponenten der erfindungsgemäß hergestellten Polyurethane handelt es sich um die hierfür üblichen und bekannten Verbindungen.

Als Isocyanate kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat und insbesondere Gemische aus Dipheylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Als Verbindungen mit mindestens zwei gegenüber Isocyanat reaktiven Gruppen kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, in Molekül tragen.

Zur Herstellung der erfindungsgemäßen Polyurethane kommen insbesondere Verbindungen mit 2 bis 8 OH-Gruppen zum Einsatz. Vorzugsweise eingesetzt werden Polyetherole und/oder Polyesterole. Die Hydroxylzahl der verwendeten Polyetherole und/oder Polyesterole beträgt vorzugsweise 100 bis 850 mg KOH/g, besonders bevorzugt 200 bis 600 mg KOH/g, die Molekulargewichte sind größer als 400. Die erfindungsgemäßen Polyurethane können ohne oder mit Kettenverlängerungs- und/oder Vernetzungsmitteln hergestellt werden. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.

Weiterhin können die üblichen Katalysatoren, Hilfs- und/oder Zusatzstoffe eingesetzt werden. Als Treibmittel können, neben den oben genannten Verbindungen, auch Wasser und andere als die genannten physikalischen Treibmittel eingesetzt werden.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Die erfindungsgemäßen Polyurethane weisen eine Offenzelligkeit von 50 bis 100 % auf. Ihre freigeschäumte Dichte beträgt vorzugsweise 30 bis 100 kg/m³, insbesondere 50 bis 65 kg/m³.

Ebenso werden Gesamtrohdichten angestrebt, die im Bereich zwischen 30 bis 100 kg/m³, insbesondere 50 bis 65 kg/m³, liegen.

Die erfindungsgemäß hergestellten Polyurethane werden, wie oben ausgeführt, insbesondere als Kernmaterial für Vakuum-Isoliereinheiten verwendet.

Die Evakuierzeiten der erfindungsgemäßen Vakuum-Isoliereinheiten können gegenüber solchen ohne Rillen wesentlich verkürzt werden. Hohlräume, die mit offenzelligem PU-Schaum ausgefüllt sind, können durch die erfindungsgemäß hergestellten Polyurethan-Schaumstoffe erstmals in einer technisch vertretbaren Zeit evakuiert werden. Gegenüber dem mechanischen Anbringen der Rillen kann eine wesentliche Vereinfachung bei der Herstellung erreicht werden.

Die Erfindung soll an nachfolgenden Beispielen näher erläutert werden.

### Beispiele

### a) Eingesetzte Einsatzstoffe für die Formkörper

ai) Polyolkomponente
   - 20: Gewichtsteile eines Polyetherpolyols mit einer Hydroxylzahl von 470 mg KOH/g, hergestellt durch Umsetzung von Ethylendiamin mit Propylenoxid
   - 40: Gewichtsteile eines Polyetherpolyols mit einer Hydroxylzahl von 555 mg KOH/g, hergestellt durch Umsetzung von Trimethylolpropan mit Propylenoxid
   - 30: Gewichtsteile eines Polyetherpolyols mit einer Hydroxylzahl von 490 mg KOH/g, hergestellt durch Umsetzung einer Mischung von Saccharose, Glycerin und Wasser mit Propylenoxid
   - 10: Gewichtsteile eines Polyesterols aus Glycerin und Rizinusöl mit einer Hydroxylzahl von 500 mg KOH/g
   - 3: Gewichtsteile Schaumstabilisator Tegostab® B8461 der Firma Goldschmidt
   - 1: Gewichtsteil Schaumstabilisator Tegostab® B8870Z der Firma Goldschmidt
   - 5: Gewichtsteile Katalysator Dabco® AN 20 der Firma Air Products
   - 0,5: Gewichtsteile Wasser
   - 7: Gewichtsteile Cyclopentan
   - 4: Gewichtsteile Perfluorhexan
aii) Isocyanatkomponente
   Gemisch aus Diphenylmethandiisocyanaten und Polyphenylenpolymethylenpolyisocyanaten mit einem NCO-Gehalt von 31,0 Gew.-% (Lupranat® M 20 A)

### b) Herstellung der Formkörper

### Beispiel 1 (Vergleich)

Die Isocyanatkomponente und die Polyolkomponente wurden bei einem Index von 140 mit einer Hochdruckschäummaschine Puromat® SV 20 der Firma Elastogran vermischt und in ein auf 45°C temperiertes Formwerkzeug mit den Maßen 700 mm x 400 mm x 90 mm, ausgelegt mit einer Aluminium-Verbundfolie, wie sie bei der Herstellung von Vakuum-Isolations-Panels verwendet wird, eindosiert, das anschließend fest verschlossen wurde. Vorher wurde durch Versiegeln mit einem handelsüblichen Schweißgerät, z.B. der Firma "Hawo"hpl 450 AS die Aluminium-Verbundfolie zu einer Folientüte geschlossen. Der Verdichtungsgrad betrug 1,1.

Die Gesamtdichte des Formkörpers betrug 65 kg/m³. Die Entformzeit war 30 Minuten. Die Offenzelligkeit des Schaumstoff war 100 %.

### Beispiel 2

Es wurde verfahren wie in Beispiel 1, jedoch wurden vor dem Einbringen des Polyurethansystems 1,5 %ige Methylcellulose in Wasser in einer Breite von ca. 5 mm und Abständen von 25 mm beidseitig auf die Innenseite der Aluminium-Verbundfolie aufgebracht.

Die Gesamtdichte des Formkörpers betrug 65 kg/m³. Die Entformzeit war 30 Minuten. Die Offenzelligkeit des Schaumstoff war 100 %.

Der entstandene Formkörper wies im Abstand von 25 mm rillenförmige Vertiefungen auf. Im Innern dieser Vertiefungen hatte sich, in Gegensatz zur übrigen Oberfläche des Formkörpers, keine Haut ausgebildet.

### c) Untersuchung des Verhaltens bei der Evakuierung

Je ein Formkörper gemäß Beispiel 1 und Beispiel 2, wurden über eine einzige Ventilöffnung punktuell evakuiert. Über ein Pirani-Druckmeßgerät wurde das Absinken des Druckes am Schaumstoffende bestimmt.

Der Druckverlauf über die Zeit ist in Kurve 1 festgehalten. Wie ersichtlich, sinkt der Druck bei dem erfindungsgemäßen Formkörper schneller und tiefer als bei dem gemäß dem Vergleichsbeispiel hergestellten Formkörper.

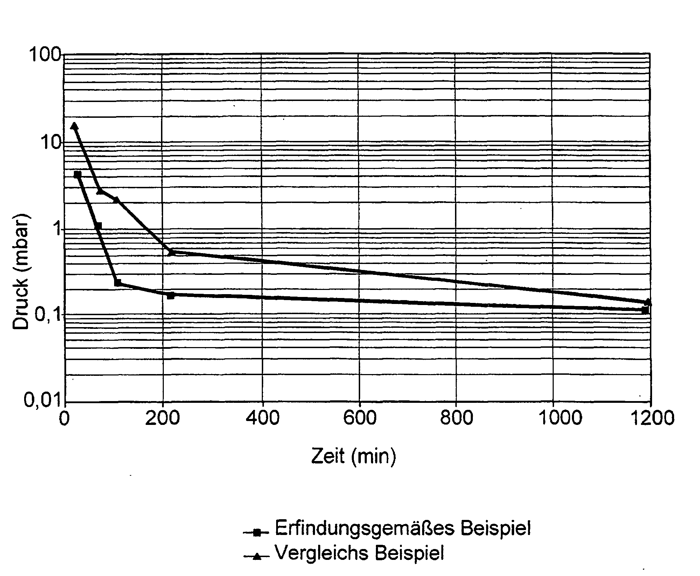

## Patentansprüche

1. Verfahren zur Herstellung von Polyurethanschaumformkörpern mit Rillen an der Oberfläche, **dadurch gekennzeichnet, daß** vor dem Einbringen des Polyurethansystems in das Formwerkzeug beziehungsweise den auszuschäumenden Hohlraum auf die Oberfläche des Formwerkzeugs beziehungsweise der Deckschichten des Hohlraums Substanzen aufgebracht werden, die dort, wo sie aufgebracht sind, den Schaumprozeß in der Weise beeinflussen, daß in der Umgebung dieser Materialien an der Oberfläche des Schaumes Rillen entstehen.

2. Verfahren nach Anspruch 1, **dadurch gekennzeichnet, daß** die Substanzen in einer geometrischen Anordnung angebracht werden, daß längliche, in Richtung der Evakuierung verlaufende Rillen entstehen.

3. Verfahren nach Anspruch 1, **dadurch gekennzeichnet, daß** die Substanzen nicht mit dem Polyurethanschaumsystem reaktiv sind.

4. Verfahren nach Anspruch 3, **dadurch gekennzeichnet, daß** als nicht mit dem Polyurethanschaumsystem reaktive Substanzen Fette, Öle und Wachse, Latex und gummiartige Verbindungen, Stearate und Stearinsäureester, Gelatine, Silicone, beispielsweise Polyethersilicone als Fette oder Öle, übliche technische Entschäumer und Tenside, Verbindungen, die in der Polyurethanchemie üblicherweise als innere und äußere Trennmittel verwendet werden, wie Metallstearate oder Mikrowachsemulsionen, sowie übliche technische Reinigungsemulsionen und Zubereitungen zum Auflösen von Polyurethan-Hartschaumstoffen verwendet werden.

5. Verfahren nach Anspruch 1, **dadurch gekennzeichnet, daß** die Substanzen mit dem Polyurethanschaumsystem reaktiv sind.

6. Verfahren nach Anspruch 5, **dadurch gekennzeichnet, daß** als mit dem Polyurethanschaumsystem reaktive Substanzen Polysaccharide wie Stärken als Mehle und aufgeschlossene Stärken, Zellulose, substituierte Zellulosen, Monosaccharide, Glycerin, Glyceride und Glycerinester, Polyetherole und/oder Polyesterole mit Molmassen kleiner 200, in der Polyurethanchemie übliche Zellöffner mit oder ohne siliconhaltiger Struktur, beispielsweise auf der Basis ungesättigter Verbindungen oder Stearate, an unterschiedliche Träger gebundenes Wasser, höhere gesättigte und/oder ein- oder mehrfach ungesättigte Fettsäuren verwendet werden.

7. Verfahren nach Anspruch 1, **dadurch gekennzeichnet, daß** die Rillen eine Breite von 0,1 bis 100 mm aufweisen.

8. Verfahren nach Anspruch 1, **dadurch gekennzeichnet, daß** die Rillen eine Breite von 2 bis 15 mm aufweisen.

9. Verfahren nach Anspruch 1, **dadurch gekennzeichnet, daß** die Rillen einen Abstand voneinander von 0,9 bis 30 mm aufweisen.

10. Verfahren nach Anspruch 1, **dadurch gekennzeichnet, daß** die Rillen eine Tiefe von 0,1 bis 30 mm aufweisen.

## Claims

1. A process for producing polyurethane foam moldings having grooves on the surface, wherein, prior to the introduction of the polyurethane system into the mold or into the hollow space to be filled with foam, substances which influence the foaming process are applied to the surface of the mold or the covering layers of the hollow space and, in the places where they have been applied, influence the foaming process in such a way that grooves are formed on the surface of the foam in the vicinity of these materials.

2. A process as claimed in claim 1, wherein the substances are applied in a geometric arrangement so that elongated grooves extending in the direction of evacuation are formed.

3. A process as claimed in claim 1, wherein the substances are not reactive toward the polyurethane foam system.

4. A process as claimed in claim 3, wherein the substances which are not reactive toward the polyurethane foam system are fats, oils and waxes, latex and rubber-like compounds, stearates and esters of stearic acid, gelatin, silicones, for example polyether silicones as fats or oils, customary industrial antifoams and surfactants, compounds which are customarily used in polyurethane chemistry as internal and external mold release agents, e.g. metal stearates or microwax emulsions, and also customary industrial cleaning emulsions and preparations for dissolving rigid polyurethane foams.

5. A process as claimed in claim 1, wherein the substances are reactive toward the polyurethane foam system.

6. A process as claimed in claim 5, wherein the substances which are reactive toward the polyurethane foam system are polysaccharides such as starches from flours and hydrolyzed starches, cellulose, substituted celluloses, monosaccharides, glycerol, glycerides and glyceryl esters, polyetherols and/or polyesterols having molar masses of less than 200, cell openers customary in polyurethane chemistry with or without a silicone-containing structure, for example based on unsaturated compounds or stearates, water bound to various supports, higher saturated and/or monounsaturated or polyunsaturated fatty acids.

7. A process as claimed in claim 1, wherein the grooves have a width of from 0.1 to 100 mm.

8. A process as claimed in claim 1, wherein the grooves have a width of from 2 to 15 mm.

9. A process as claimed in claim 1, wherein the grooves are at a distance of from 0.9 to 30 mm from one another.

10. A process as claimed in claim 1, wherein the grooves have a depth of from 0.1 to 30 mm.

## Revendications

1. Procédé de fabrication de corps façonnés en mousse de polyuréthane doté de rainures sur leur surface, **caractérisé en ce qu'**avant d'amener le système de polyuréthane dans l'outil de façonnage ou dans l'espace creux à mousser, on applique à la surface de l'outil de façonnage ou sur les couches de recouvrement de l'espace creux des substances qui, lorsqu'elles y sont apportées, influencent le processus de moussage de telle sorte que des rainures soient formées à la surface de la mousse au voisinage de ces substances.

2. Procédé selon la revendication 1, **caractérisé en ce que** les substances sont appliquées dans un agencement géométrique qui fait apparaître des rainures allongées s'étendant en direction de l'évacuation.

3. Procédé selon la revendication 1, **caractérisé en ce que** les substances ne réagissent pas avec le système de mousse de polyuréthane.

4. Procédé selon la revendication 3, **caractérisé en ce que** comme substances ne réagissant pas avec le système de mousse de polyuréthane, on utilise des graisses, des huiles et des cires, du latex et des composés de type caoutchouteux, des stéarates et des esters d'acide stéarique, des gélatines, des silicones, par exemple des polyéthers silicones présentant la forme de graisses ou d'huiles, des démoussants techniques habituels et des agents tensioactifs, des composés qui sont habituellement utilisés dans la chimie de polyuréthane comme agents de séparation intérieure et extérieure, comme des stéarates de métaux et des microémulsions de cire, ainsi que des émulsions de nettoyage technique habituelles et des préparations de dissolution de matières en mousse dure de polyuréthane.

5. Procédé selon la revendication 1, **caractérisé en ce que** les substances réagissent avec le système de mousse de polyuréthane.

6. Procédé selon la revendication 5, **caractérisé en ce que** comme substances réagissant avec le système de mousse de polyuréthane, on utilise des polysaccharides tels que des amidons en poudre et des amidons en solution, de la cellulose, des celluloses substituées, des monosaccharides, de la glycérine, des glycérides et des esters de glycérine, des polyesterols et/ou des polyesterols d'un poids moléculaire inférieur à 200, des agents d'ouverture de cellules habituels dans la chimie des polyuréthanes, avec ou sans structure contenant du silicone, de préférence à base de composés insaturés ou de stéarate, de l'eau liée à différents supports, des acides gras supérieurs saturés et/ou des acides gras mono ou polyinsaturés.

7. Procédé selon la revendication 1, **caractérisé en ce que** les rainures présentent une largeur de 0,1 à 100 mm.

8. Procédé selon la revendication 1, **caractérisé en ce que** les rainures présentent une largeur de 2 à 15 mm.

9. Procédé selon la revendication 1, **caractérisé en ce que** les rainures présentent entre elles une distance de 0,9 à 30 mm.

10. Procédé selon la revendication 1, **caractérisé en ce que** les rainures présentent une profondeur de 0,1 à 30 mm.
